# EUROPEAN PATENT SPECIFICATION

(11) **EP 2 118 000 B1**
(45) Date of publication and mention of the grant of the patent: **25.05.2011**
(21) Application number: 08708523.9
(22) Date of filing: 31.01.2008
(51) Int. Cl.: C01B 7/19, C01F 11/46

(54) **PREPARATION OF HYDROGEN FLUORIDE FROM CALCIUM FLUORIDE AND SULFURIC ACID**
HERSTELLUNG VON FLUORWASSERSTOFF AUS CALCIUMFLUORID UND SCHWEFELSÄURE
PRÉPARATION DE FLUORURE D'HYDROGÈNE À PARTIR DE FLUORURE DE CALCIUM ET D'ACIDE SULFURIQUE

(30) Priority: 02.02.2007 EP 07101661
(43) Date of publication of application: 18.11.2009
(73) Proprietor: Solvay Fluor GmbH, 30173 Hannover (DE)
(72) Inventor: GRASS, Helmut, 74177 Bad Friedrichshall (DE)
(74) Representative: Jacques, Philippe
(86) International application number: PCT/EP2008/051212
(87) International publication number: WO 2008/092926

(56) References cited:
- EP-A1- 0 163 565
- GB-A- 1 304 781
- US-A- 3 404 953
- US-A- 3 469 939
- US-A- 3 825 655

## Description

The invention concerns a process for the production of HF by the reaction of calcium fluoride and H₂SO₄.

HF can be used, i.a., as fluorinating agent, for example, to produce fluorinated organic compounds from chlorinated precursors by catalyzed or non-catalyzed chlorine-fluorine exchange, for producing inorganic compounds, e.g. SF₆, or for the preparation of F₂.

HF is produced in large amounts from sulfuric acid and calcium fluoride (CaF₂) in the form of fluorospar. Belgian patent BE 676420 (corresponding to US patent 3282644) describes such a process. Commercial fluorospar is applied in the form of particles at least 75 % of which pass a sieve with openings of 0.149 mm (mesh 100 US standard sieve). The fluorospar is reacted with SO₃, water vapor and gaseous sulfuric acid in a rotating kiln. Sufficient heat to perform the reaction is delivered to the reaction mixture by the condensation of the gaseous reactants.

Belgian patent BE 786915 (US patent 3825655) describes the preparation of HF from fluorospar and sulfuric acid. The fluorospar is introduced in the form of particles with a maximum size between 40 to 300 µm, the reaction with sulfuric acid is performed in a first step as aqueous suspension. Sulfuric acid is applied in a 1.2 to 11-fold stoechiometric excess. CaSO₄ formed is then separated from the suspension.

German Offenlegungsschrift Die 2544572 decribes the reaction of CaF₂ with sulfuric acid wherein all components of the reaction are heated to a temperature above the boiling point of the sulfuric acid which is used. No liquid phases are formed during the reaction. Natural fluorospar is applied in the form of particles with a particle size of less than 150 µm.

US patent 4,460,551 describes a process for the preparation of HF by reaction of fluorospar, sulfuric acid, oleum and a reflux of acid scrubbing. The reaction is performed in a manner that no fluorosulfonic acid enters the reactor.

Objective of the present invention is to provide a process for preparation of HF from fluorospar in the form of fines, especially fines obtained from a neutralization reaction of HF and basic calcium salts, for example calcium oxide, calcium carbonate, calcium hydroxide or milk of lime, e.g. as a result of a waste gas purification or waste water purification of HF-containing waste gases or waste waters.

According to the present invention, essentially dry calcium fluoride is reacted with essentially water free sulfuric acid in the form of a suspension wherein the solids content is equal to or lower than 25 % by weight and wherein the calcium fluoride is comprised in a starting material which comprises additives or impurities which react exothermically with the sulfuric acid and thus generate heat. The reaction is preferably performed continuously. Preferably, the molar ratio between sulfuric acid and calcium fluoride is at least 1.25:1. The term "essentially dry" preferably denotes calcium fluoride with a water content of not more than 1 % by weight. The term "essentially water free sulfuric acid" denotes sulfuric acid of a concentration of at least 90 % by weight. Preferably, the term denotes sulfuric acid of a concentration of at least 95 % by weight. Very preferably, sulfuric acid with a concentration of 95 to 100 % by weight is applied.

The calcium fluoride is comprised in the starting material in the form of solids which may comprise other compounds besides calcium fluoride. For example, calcium oxide, calcium carbonate or calcium hydroxide can be added to calcium fluoride.

Preferred solids originate from waste water or waste gas purification processes. For example, waste water or waste gas may comprise HF or fluorides or precursors of HF or fluorides; such precursors may, for example, be carboxylic acid fluorides which upon hydrolysis form HF. Such HF-containing waste water or waste gas often is treated with purification agents which comprise or consist of basic calcium salts, for example, calcium oxide, calcium hydroxide or calcium carbonate. These basic calcium salts are converted into calcium fluoride upon reaction with HF, fluorides or their precursors. The residues of such purification processes comprise calcium fluoride and often unreacted basic calcium salts. Such residues, preferably after drying, are preferably applied as starting material in the present invention. Another solid which can be treated are residues of fertilizer production. In fertilizer production, phosphate rock is converted into a phosphate containing fertilizer product. Often, residues result in this process which comprise calcium fluoride, often together with silicates, fluorosilicates or silicon dioxide. Also, in the glass industry, HF is applied, and waste gases or waste water containing HF are treated with basic calcium compounds. Also here, wastes are formed which contain basic calcium salts, and thus can be treated advantageously in the inventive manner.

The amount of calcium fluoride in such starting material often is equal to or greater than 75 % by weight, preferably equal to or greater than 80 % by weight, calculated to the dry weight.

The upper limit is equal to or lower than 95 % by weight, especially equal to or lower than 90 % by weight. The content of basic calcium salts in the starting material is preferably higher than or equal to 5 % by weight, more preferably equal to or higher than 10 % by weight. It is preferably equal to or lower than 25 % by weight, more preferably equal to or lower than 20 % by weight.

If desired, a starting material can be applied with a comparably low content of CaF₂. Such a starting material may be the composition of matter obtained if a waste gas or waste water is treated with basic calcium salts, e.g. the oxide, hydroxide or carbonate as purifying agent wherein the treatment is stopped before the theoretical amount of HF is removed from the treated waste gas or waste water. Thus, the risk of a breakthrough of HF by exhaustion of the purifying agent is avoided. For example, the content of CaF₂ may be equal to or higher than 10 % by weight, the remainder being basic calcium salts.

The particulate calcium fluoride containing residues often has essentially a particle size of equal to or lower than 250 µm, often equal to or lower than 200 µm. The residue may comprise particles as small as 1 µm and even less, down to the nanometer range. Preferably, at least 80 % of the particles have said particle size of equal to or less than 250 µm.

The reaction mixture comprises sulfuric acid and suspended solids. The solids comprise unreacted starting material, especially calcium fluoride and, in a preferred embodiment, unreacted basic calcium salts. The calcium compounds in the suspension of starting material react with sulfuric acid to form calcium sulfate. Consequently, the suspension also comprises calcium sulfate.

Preferably, the solids (including starting material and calcium sulfate) are comprised in the reaction mixture in an amount of equal to or more than 3 % by weight, preferably equal to or more than 5 % by weight. Preferably, the solids are comprised in the reaction mixture in an amount equal to or less than 25 % by weight, preferably equal to or less than 20 % by weight. In a preferred embodiment, the reaction is performed in a continuous stirrer tank reactor.

The temperature in the reactor is preferably equal to or higher than 150°C, more preferably equal to or higher than 160°C. Likewise, it is preferably equal to or lower than 230°C, more preferably equal to or lower than 220°C.

The residence time in the reactor is preferably equal to or higher than 5 minutes. It is preferably equal to or lower than 30 minutes.

The reaction between calcium fluoride and sulfuric acid is endotherm. The reaction heat required can be supplied for example by any suitable means, e.g. by heating elements in the reactor. The heat is supplied by the reaction between sulfuric acid and additives or, preferably, impurities contained in the starting material. For example, basic calcium salts, e.g. calcium oxide, calcium hydroxide or calcium carbonate might be added to calcium fluoride, as described above. Preferably, basic calcium salts are contained in the starting material as impurities. Such impurities are comprised in calcium fluoride containing residues originating from waste water or waste gas purification processes intended to remove HF, fluorides or HF precursors, as was explained in detail above. That is one of the reasons why such residues are preferred starting material.

The hot hydrogen fluoride which is formed in the reaction leaves the reactor in gaseous form. It is then purified. Higher-boiling impurities, especially water, can be removed, and the heat can be recovered, for example, by contacting the HF with sulfuric acid in a jet washer. The HF thus purified can be further purified, e.g. by fractionated condensation or fractionated distillation. The hot sulfuric acid can be introduced into the reactor to react with further calcium fluoride, and in a preferred embodiment, with the impurities.

A part of the reaction mixture suspension is removed from the reactor. From the suspension, solids are separated from liquid constituents. This can be achieved easily in a decanter or a filter.

The separated solid comprises calcium fluoride and is wet because it comprises unreacted sulfuric acid. This sulfuric acid can be removed by a heat treatment in a dryer. It is preferred in the process of the present invention include a post-reaction treatment step wherein basic calcium salts, preferably calcium oxide or calcium carbonate, are added to the separated solid. Calcium hydroxide could be added, too. The calcium oxide or calcium carbonate reacts with sulfuric acid which is comprised in the separated solid. Hereby, a part of the sulfuric acid is converted to calcium sulfate; the reaction between calcium oxide or calcium carbonate and sulfuric acid generates heat which heats the solid and the still present residual sulfuric acid up to a temperature of, for example, between 280 and 300°C. Unreacted sulfuric acid is evaporated from the solid. Pure calcium sulfate is obtained which can be applied in the plaster industry. Calcium oxide, hydroxide or carbonate is advantageously added in the amount needed to neutralize all sulfuric acid. It is preferred that no excess is added.

The hot gases from the heat treatment of the separated solid can be contacted with sulfuric acid, for example in a jet washer. The hot gases are cooled hereby, while the sulfuric acid is heated up. Thus, the heat of the hot gases leaving the dryer is recovered. The hot sulfuric acid is expediently introduced into the reactor to react with calcium fluoride and the impurities in the starting material.

In the process of the invention, water may be contained in the starting material or the sulfuric acid. In the preferred embodiment, water is formed during the reaction of sulfuric acid with calcium oxide, calcium hydroxide or calcium carbonate. This water leaves the reaction system through the off gas of the jet washer. The off gas also comprises carbon dioxide, air and SO₃.

Per ton of produced HF, approximately 600 to 700 kg of CaO or an equivalent amount of CaCO₃ are added.

While, in principle, the method according to the present invention is suitable for reacting calcium fluoride from any source, for example, from fertilizer production (then optionally adding CaO or CaCO₃), it is especially suitable to treat calcium fluoride with small particle size, very especially if, as described above, a calcium fluoride containing starting material and basic Ca salts which was obtained as reaction product in the treatment of fluoride containing waste gases or waste water. Calcium fluoride wastes can be treated the origin of which is HF-containing waste gas or waste water from HF production, or from industrial processes in which HF is applied, e.g. waste gases from etching processes in the semiconductor industry or in the glass industry. It is also applicable to fine calcium fluoride particles obtained from filters used for treatment of waste gas or waste water which especially originates from drying operations or treatment steps performed to remove fines from fluorospar. The process of the present invention generally has the following advantages :
■ It operates with sulfuric acid, no oleum or addition of SO₃ is applied.
■ In the preferred embodiment wherein reaction heat is supplied by the reaction of sulfuric acid with impurities in the starting material, the heat is generated inside the reactor and must not be supplied from external heat sources. This obviates construction elements needed for external heat supply.
■ Residues comprising calcium fluoride can be converted into a useful product. The presence of unreacted basic calcium salts as impurities in the calcium fluoride containing wastes, for example obtained in waste gas or waste water treatment intended to remove HF, in principle an undesired waste of resources, is turned in the process of the present invention into an advantageous property of such residues.
■ The residues, due their fine particle size, often are difficult to be converted to calcium fluoride in the common process which provides for a crumb like mixture of fluorospar and sulfuric acid. In the present process, the fineness of the particles accelerates the reaction speed.
■ The costs are low.
■ Further, the residue must not be disposed of, but can be converted to useful products, namely HF and calcium sulfate (anhydrite).
■ Material can be treated which contains calcium fluoride in rather diluted form.

The following example is intended to explain the invention further without limiting it.

### Example

The example operates with a calcium fluoride containing residue from a waste water treatment apparatus wherein the fluoride content of fluoride and HF containing waste waters are removed by treating the waste water with milk lime was used as starting material. Instead, it might be performed with fluorospar to which calcium oxide or calcium carbonate had been added.

The used apparatus comprised a continuous stirred tank reactor, a decanter, a dryer and two jet gas washers 1 and 2.

The reaction between calcium fluoride and sulfuric acid was performed in the reactor. Resulting suspension which comprised anhydrite and sulfuric acid was continuously removed from the reactor and treated in the decanter to separate solids (essentially anhydrite with residual sulfuric acid) and liquid (essentially sulfuric acid). The separated solids were fed into the dryer wherein CaO or calcium carbonate was added. Here, the residual sulfuric acid reacted with CaO or calcium carbonate, respectively, to form anhydrite, carbon dioxide and water. Gases resulting from this dryer were contacted with sulfuric acid in jet gas washer 1 wherein the content of HF and sulfuric acid in the resulting gases from the dryer were removed so that an off gas resulted which essentially consisted of water vapor. The hot sulfuric acid from jet gas washer 1 was introduced into the reactor to react with calcium fluoride.

The HF gases which formed in the reactor were contacted with sulfuric acid in a jet gas washer 2. Essentially pure HF leaves the jet gas washer 2 and can be further purified, e.g. by fractionated condensation or distillation. The hot sulfuric acid leaving jet gas washer 2 was also introduced into the reactor as starting material.

1000 kg per hour of calcium fluoride containing residue from the waste water treatment which contained 36 kg of calcium oxide and 130 kg of calcium carbonate as impurities was dried and continuously delivered into the continuous stirrer tank reactor. Sulfuric acid (concentration : 95 % by weight), originating from the jet gas washers used to purify gases originating from an anhydrite dryer also was delivered continuously into the reactor in an amount that the total solid content was kept 12 % by weight. The temperature was maintained in the range of 160 to 220°C. The average residence time in the reactor was regulated to 20 minutes.

Continuously, suspension was removed from the reactor and introduced into the decanter. In the decanter, solids were separated from liquid constituents. The separated solid was fed into a dryer wherein 300 kg of CaO per hour was added. The exothermic reaction between CaO and residual sulfuric acid in the solid heated the solid up to 280 to 300°C. Sulfuric acid which had not reacted with CaO is expelled at that temperature in gaseous form as SO₃ and H₂O from the solid. The off gases from the dryer were contacted in jet gas washer 1 where the SO₃ content was absorbed. Water vapor passed the washer.

The example demonstrates that the inventive process allows the workup of waste water treatment residues in an energy-saving manner.

## Claims

1. Process for the preparation of HF and calcium sulfate wherein essentially dry calcium fluoride is reacted in the form of a suspension with essentially water free sulfuric acid, wherein the solids content in the suspension is equal to or lower than 25 % by weight, and wherein the calcium fluoride is comprised in a starting material which comprises additives or impurities which react exothermically with the sulfuric acid and thus generate heat.

2. Process according to claim 1 wherein the molar ratio between sulfuric acid and calcium fluoride is equal to or greater than 1.25:1.

3. Process according to claim 1 wherein the calcium fluoride is comprised in a starting material which comprises impurities which react exothermically with the sulfuric acid and thus generate heat.

4. Process according to claim 3 wherein the starting material is a residue from waste water purification or waste gas purification to remove HF.

5. Process according to claim 4 wherein the residue originates from the purification of the waste gas or waste water with basic calcium salts, preferably calcium oxide or calcium carbonate.

6. Process according to claim 5 wherein the residue comprises 75 to 95 % by weight of calcium fluoride and 5 to 25 % by weight of unreacted basic calcium salt.

7. Process according to claim 1 wherein the suspension contains a total solid content in the range of 3 to 25 % by weight, preferably 5 to 20 % by weight.

8. Process according to claim 1, 2 or 3 wherein suspension is removed from the reactor and separated into solid and liquid.

9. Process according to claim 8 wherein the separated solid is heated in a dryer to remove residual sulfuric acid.

10. Process according to claim 9 wherein the solid is heated to a temperature in the range of 280 to 300 °C.

11. Process according to claim 8 wherein CaO or CaCO₃ is added to the separated solid to convert sulfuric acid to calcium sulfate.

12. Process according to claim 11 wherein sufficient CaO or CaCO₃ is added so that the heat generated by the reaction between CaO or CaCO₃ and residual sulfuric acid is sufficient to raise the temperature in the solid to 280 to 300 °C.

13. Process according to claim 9 wherein the gases leaving the dryer are contacted with sulfuric acid.

14. Process according to claim 1 wherein HF containing gases are removed from the reactor and contacted with sulfuric acid.

15. Process according to claims 13 or 14 wherein the sulfuric acid after contact with the gases is introduced into the reactor as reactant.

16. Process according to any claims 1 to 15 wherein the particle size of calcium fluoride, of the residue and/or of the solids content in the suspension is equal to or lower than 200 µm.

17. Process according to claim 1 wherein the reaction is performed continuously.

## Patentansprüche

1. Verfahren zur Herstellung von HF und Calciumsulfat, bei dem man im wesentlichen trockenes Calciumfluorid in Form einer Suspension mit im wesentlichen wasserfreier Schwefelsäure umsetzt, wobei der Feststoffgehalt in der Suspension kleiner gleich 25 Gew.- % ist und das Calciumfluorid in einem Ausgangsstoff enthalten ist, der Additive oder Verunreinigungen umfaßt, die mit der Schwefelsäure exotherm reagieren und somit Wärme erzeugen.

2. Verfahren nach Anspruch 1, bei dem das Molverhältnis zwischen Schwefelsäure und Calciumfluorid größer gleich 1,25:1 ist.

3. Verfahren nach Anspruch 1, bei dem das Calciumfluorid in einem Ausgangsstoff enthalten ist, der Verunreinigungen umfaßt, die mit der Schwefelsäure exotherm reagieren und somit Wärme erzeugen.

4. Verfahren nach Anspruch 3, bei dem es sich bei dem Ausgangsstoff um einen Rückstand der Abwasserreinigung oder Abgasreinigung zur Entfernung von HF handelt.

5. Verfahren nach Anspruch 4, bei dem der Rückstand aus der Reinigung des Abgases oder Abwassers mit basischen Calicumsalzen, vorzugsweise Calciumoxid oder Calciumcarbonat, stammt.

6. Verfahren nach Anspruch 5, bei dem der Rückstand 75 bis 95 Gew.- % Calciumfluorid und 5 bis 25 Gew.- % nicht umgesetztes basisches Calciumsalz umfaßt.

7. Verfahren nach Anspruch 1, bei dem die Suspension einen Gesamtfeststoffgehalt im Bereich von 3 bis 25 Gew.-%, vorzugsweise 5 bis 20 Gew.- %, enthält.

8. Verfahren nach Anspruch 1, 2 oder 3, bei dem man die Suspension aus dem Reaktor austrägt und in Feststoff und Flüssigkeit trennt.

9. Verfahren nach Anspruch 8, bei dem man den abgetrennten Feststoff zur Entferung von Schwefelsäureresten in einem Trockner erhitzt.

10. Verfahren nach Anspruch 9, bei dem man den Feststoff auf eine Temperatur im Bereich von 280 bis 300°C erhitzt.

11. Verfahren nach Anspruch 8, bei dem man den abgetrennten Feststoff CaO oder CaCO₃ zur Umwandlung von Schwefelsäure in Calciumsulfat zusetzt.

12. Verfahren nach Anspruch 11, bei dem man so viel CaO oder CaCO₃ zusetzt, daß die durch die Reaktion zwischen CaO oder CaCO₃ und Schwefelsäureresten erzeugte Wärme zur Erhöhung der Temperatur in dem Feststoff auf 280 bis 300°C ausreicht.

13. Verfahren nach Anspruch 9, bei dem man die aus dem Trockner austretenden Gase mit Schwefelsäure in Berührung bringt.

14. Verfahren nach Anspruch 1, bei dem man HF enthaltende Gase aus dem Reaktor austrägt und mit Schwefelsäure in Berührung bringt.

15. Verfahren nach Anspruch 13 oder 14, bei dem man die Schwefelsäure nach Inberührungbringen mit den Gasen als Reaktant in den Reaktor einträgt.

16. Verfahren nach einem der Ansprüche 1 bis 15, bei dem die Teilchengröße des Calciumfluorids, des Rückstands und/oder des Feststoffgehalts in der Suspension kleiner gleich 200 µm ist.

17. Verfahren nach Anspruch 1, bei dem man die Umsetzung kontinuierlich durchführt.

## Revendications

1. Procédé pour la préparation de HF et de sulfate de calcium dans lequel on fait réagir du fluorure de calcium essentiellement sec sous la forme d'une suspension avec de l'acide sulfurique essentiellement sans eau, dans lequel la teneur en matières solides dans la suspension est égale ou inférieure à 25 % en poids, et dans lequel le fluorure de calcium est contenu dans une matière première qui comprend des additifs ou des impuretés qui réagissent de façon exothermique avec l'acide sulfurique et génèrent ainsi de la chaleur.

2. Procédé selon la revendication 1 dans lequel le rapport molaire entre l'acide sulfurique et le fluorure de calcium est égal ou supérieur à 1,25:1.

3. Procédé selon la revendication 1 dans lequel le fluorure de calcium est contenu dans une matière première qui comprend des impuretés qui réagissent de façon exothermique avec l'acide sulfurique et génèrent ainsi de la chaleur.

4. Procédé selon la revendication 3 dans lequel la matière première est un résidu de purification d'eaux usées ou de purification d'effluents gazeux pour retirer HF.

5. Procédé selon la revendication 4 dans lequel le résidu provient de la purification des effluents gazeux ou des eaux usées avec des sels de calcium basiques, de préférence de l'oxyde de calcium ou du carbonate de calcium.

6. Procédé selon la revendication 5 dans lequel le résidu comprend 75 à 95 % en poids de fluorure de calcium et 5 à 25 % en poids de sel de calcium basique n'ayant pas réagi.

7. Procédé selon la revendication 1 dans lequel la suspension contient une teneur totale en matières solides dans la gamme de 3 à 25 % en poids, de préférence 5 à 20 % en poids.

8. Procédé selon la revendication 1, 2 ou 3 dans lequel la suspension est retirée du réacteur et séparée en solide et en liquide.

9. Procédé selon la revendication 8 dans lequel le solide séparé est chauffé dans un dessiccateur pour retirer l'acide sulfurique résiduel.

10. Procédé selon la revendication 9 dans lequel le solide est chauffé à une température dans la gamme de 280 à 300°C.

11. Procédé selon la revendication 8 dans lequel du CaO ou du CaCO₃ est ajouté au solide séparé pour transformer l'acide sulfurique en sulfate de calcium.

12. Procédé selon la revendication 11 dans lequel suffisamment de CaO ou de CaCO₃ est ajouté pour que la chaleur générée par la réaction entre CaO ou CaCO₃ et l'acide sulfurique résiduel soit suffisante pour élever la température dans le solide jusqu'à 280 à 300 °C.

13. Procédé selon la revendication 9 dans lequel les gaz quittant le dessiccateur sont mis en contact avec de l'acide sulfurique.

14. Procédé selon la revendication 1 dans lequel les gaz contenant HF sont retirés du réacteur et mis en contact avec de l'acide sulfurique.

15. Procédé selon la revendication 13 ou 14 dans lequel l'acide sulfurique, après contact avec les gaz, est introduit dans le réacteur en tant que réactif.

16. Procédé selon l'une quelconque des revendications 1 à 15 dans lequel la taille des particules de fluorure de calcium, du résidu et/ou des matières solides dans la suspension est égale ou inférieure à 200 µm.

17. Procédé selon la revendication 1 dans lequel la réaction est effectuée en continu.
